(19)

Europäisches
Patentamt
European
Patent Office
Office européen
des brevets

(11)  **EP 3 778 844 A1**

(12)  **EUROPEAN PATENT APPLICATION**

(43) Date of publication:
**17.02.2021 Bulletin 2021/07**

(51) Int Cl.:
***C11C 5/00*** *(2006.01)*

(21) Application number: **20191175.7**

(22) Date of filing: **14.08.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.08.2019   US 201962887011 P**

(71) Applicant: **International Flavors & Fragrances Inc.
New York, NY 10019 (US)**

(72) Inventors:
• **GIFFIN, Nicole Lauren
NJ, 07733 (US)**
• **BRAIN, Joseph
NJ, 07733 (US)**
• **GENO, Jason
NJ, 07733 (US)**

(74) Representative: **Barker Brettell LLP
100 Hagley Road
Edgbaston
Birmingham B16 8QQ (GB)**

(54)  **CATALYTIC WICKS AND CANDLES CONTAINING THE SAME**

(57)   Disclosed are candles and wicks. Each of the wicks contains a wick support and a catalyst deposited on the wick support.

EP 3 778 844 A1

**Description**

**BACKGROUND**

Candles are used as a source of light and for dispersing a fragrance in a room. The candle in general has a wax body and a wick inserted in the center of the wax body. Burning candles, particularly scented candles, produce unwanted soot. Further, the emissions in the form of volatile organic compounds (VOCs) have come under scrutiny as an undesirable effect from burning candles.

Trying to address the soot problem, different candle designs and improvements in waxes and wicks were attempted.

Much attention has been drawn to design alternative candle wax compositions for cleaner burning. See US 2017/0253832, US 8,157,873, US 8,551,194, and US 8,939,758

US 2003/0215763 sought to reduce sooting and smoking by using a specially designed wick which includes a ceramic core and a cotton jacket. Carbon materials were also used to prepare a wick in the hope of a cleaner burning of the wick. See US 2018/0023034. Polyethylene was also used as a wick material for controlled release of an air freshener as described in WO 1999/031207.

There were also approaches in designing special devices such as candles and burners to lessen the soot emission. See WO 2008/152353, and US 9,974,879.

In spite of these efforts, soot remains as a major challenge. Further, the VOCs problem in candle burning has not been address by any of the publications mentioned above.

There is a need to develop a wick and a candle having a clean emission.

**SUMMARY OF THE INVENTION**

This application is based on the unexpected discovery of wicks and candles with a reduced level of soot and VOCs emission in regular use.

One aspect of this invention relates to a wick for a candle comprising a wick support and a catalyst deposited on the wick support. Another aspect of this invention relates to a candle having this wick.

All parts, percentages and proportions refer to herein and in the claims are by weight unless otherwise indicated.

The values and dimensions disclosed herein are not to be understood as being strictly limited to the exact numerical values recited. Instead, unless otherwise specified, each such value is intended to mean both the recited value and a functionally equivalent range surrounding that value. For example, a value disclosed as "50%" is intended to mean "about 50%."

The terms "g" and "$\mu$g" refer to "gram" and "microgram," respectively. The terms "m," "mm," "$\mu$m" and "nm" refers to "meter," "millimeter," "micrometer" and "nanometer."

The terms "include," "includes," and "including," are meant to be non- limiting.

The details of one or more embodiments of the invention are set forth in the description below. Other features, objects, and advantages of the invention will be apparent from the description and the claims.

**DETAILED DESCRIPTION OF THE INVENTION**

It is unexpectedly found that the wick of this invention not only greatly reduces the emission of soot and VOC, but also promotes a desirable smell from burning a fragranced candle.

The wick of the invention is suitable for use in fragranced or unfragranced candles, fragranced burners, flame lamps, torches, and the like. It is compatible with a liquid or solid fuel, with or without an additive such as a fragrance, a pest repellent, a malodor counteractant, and combinations thereof.

The wick of this invention contains a wick support and a catalyst deposited on the wick support. The catalyst is present at a level of 0.1% to 20% (*e.g.*, 0.2% to 10% and 0.5% to 8%) by weight of the wick. Any oxidation catalyst can be used in this invention. The term "oxidation catalyst" refers to a catalyst facilitate an oxidation reaction or the burning of a fuel such as a wax and a flammable liquid. This catalyst is typically (i) a catalytic metal, or an oxide or salt thereof, or (ii) a catalytic metal deposited on a catalyst support. Exemplary catalytic metals include platinum, palladium, rhodium, iridium, ruthenium, lanthanum, gold, copper, silver, calcium, magnesium, manganese, aluminum, cerium, nickel, any salt thereof, any oxide thereof, and any combinations thereof. These catalytic metals can be used directly on the wick. Alternatively, they are deposited on a catalytic support such as active carbon, zeolite, alumina, and any combinations thereof. Preferred catalysts include platinum on carbon (Pt/C), palladium on carbon (Pd/C), platinum on zeolite, palladium on zeolite, platinum on alumina (Pt/alumina), palladium on alumina (Pd/Alumina), aluminosilicate zeolite, and combinations thereof.

The wick support is typically formed of cotton, linen, cellulose, plastics or ceramic material, paper, hemp, wood, metal, and combination thereof. Preferably, the wick support contains a carbon material at a level of 10% to 98% (*e.g.*, 20% to 90%, and 30% to 80%) by weight of the wick support. A binder can be used to bond the carbon material to the wick support. The wick is optionally coated with a wax.

The wick described above can be incorporated into a candle that has a fuel such as a soy wax, a paraffin wax, a palm wax, a beeswax, a hydrogenated natural oil, a mineral oil, a vegetable oil, a natural oil, and any combinations thereof. The candle can further include in the fuel a fragrance and/or an additive selecting from the group consisting of antioxidants, insect repellents, colorants, and combinations thereof. The fragrance is typically present at a level of 0.1% to 30% (*e.g.*, 0.2% to 20% and 0.5% to 15%) by weight of the candle.

The candle is either free standing or further comprises a container as a part of the candle. It also can have more than one wick, such as two, three or more wicks inserted in the candle.

Detail of each component of the candle is described below.

*Wicks and Wick Materials*

Conventional candle wick materials can be used in this invention. Examples include cotton (*e.g.*, high grade cotton), linen, cellulose, plastics or ceramic material, paper, and combination thereof. Other suitable wick materials include polymeric strands such as polyethylene including hydrocarbyl polyolefinic derivatives such as low and high density polyethylene, low and high density polypropylene, polybutene, polystyrene, and the like. Additional suitable polymers include polyvinyl acetate, and acrylate resins such as polymethyl acrylate, polymethyl methacrylate, polybutyl methacrylate, poly (ethyl acrylate/ethylene), cellulosic derivatives such as cellulose acetate, methylcellulose, ethylcellulose, and the like.

The wick material is often woven (or braided) into a tall, narrow shape similar to a rope or string-like wick support. Rope-like wick supports are often manufactured in a cylindrical or rectangular shape and vary by diameter, density and material. Those wick supports are generally plaited (i.e. flat braided), square braided, or tubular braided.

Optionally, the wick support is further treated with inorganic materials so that it will burn in one direction and will curl so that its end remains in the candle flame's oxidizing zone for even and intense burning. Often, the wick support has a metal (zinc, tin, and zinc-tin) wire, wood stick, or paper core to provide additional support.

Wick supports having a carbon material can be also used. Those carbon material wick supports and their preparation methods are described in US2018/0023034.

Commercial raw wicks are suitable wick supports such as the wicks available from Candlewic of Doylestown, Pennsylvania and Wicks Unlimited of Pompano Beach, Florida.

A catalyst is then applied to any of the wick supports described above to obtain a wick of this invention. In a first method, a dry catalyst is applied to a wick support followed by coating the catalyst-loaded wick support with a wax (*e.g.*, a paraffin wax). In a second method, a wick support is dipped into a melted wax that contains a catalyst suspended therein to obtain a catalyst-loaded wick support, which is dried to yield the wick of this invention. In a third method, a wick support is dipped into a suspension that contains a catalyst suspended in a solvent such as an alcohol (*e.g.*, ethanol and isopropyl alcohol), water or mixture thereof to obtain a catalyst-loaded wick support. In each of the three methods, the catalyst can be applied multiple times by repeating the dipping or coating step. A wax can be applied to coat the catalyst-loaded wick support of the second or third method.

Alternatively, a catalyst can be applied to a wick material to obtain a catalyst-loaded wick material (*e.g.*, by applying a dry catalyst directly, spraying a catalyst suspension onto the wick material, and dipping the wick material with a catalyst suspension). The catalyst-loaded wick material is then braided into a catalyst-loaded wick support, which can be used directly as a wick of this invention or further be coated with a wax to obtain a wick of this invention.

String-less wicks are also envisioned. These wicks can be formed by suspending catalyst-loaded fine granular or powdered material, such as silica gel flour or wheat fiber in a vegetable oil such as soybean oil, cottonseed oil and/or palm oil. See US 7,833,294.

The wick may further include a wick clip. The wick clip helps fix the wick vertically. A shape of the wick clip is not particularly limited, and may be various shapes such as circle, triangle, square, a clip shape, etc., depending on the purpose.

The wick of this invention preferably includes pores in the wick so that fuel of the candle is able to be moved to an upper end portion of the wick by a capillary action. When the pores are included, the fuel around the wick may be sucked up well and a flame size may be constantly maintained. Further, as the flame of the wick burns, the wick may burn together.

It is preferable that the wick has a porosity of 40 to 90 wt %, preferably 50 to 80 wt %, based on the total volume of the entire wick. In addition, as an example, the pores of the wick may have a size of 1 nm to 1000 $\mu$m, preferably 100 nm to 500 $\mu$m in diameter.

The wick of this invention is made in a variety of shapes and sizes including diameter, stiffness, fire resistance, weaving, stitch/pick tightness, density and material. Those skilled in the art can readily determine these parameters in consideration of the candle size, burning speed, and the wax used in the candle. It is generally known that increasing wick density or stitch tightness will reduce the flame height or burn rate. This is due to the fact that tighter stitches reduce the size of the capillaries in the wick, thereby restricting or reducing the capillary flow rate. By contrast, reducing the wick density or stitch tightness will increase the flame height or burn rate by increasing the size of the capillaries thereby increasing the capillary flow rate. Capillary flow volume is controlled by the number of capillaries within a wick. The number of capillaries is the amount of surface area within a wick that provides for capillary action. Given the same wick size and density, fiber or filament size controls the number of capillaries or surface area available for capillary action. The smaller the fiber or filament diameter within a wick, the more capillaries and the greater the capillary flow volume and vice versa.

The average diameter or width of the wick can be 0.01 mm to 100 mm, preferably 0.1 mm to 50 mm, and more preferably 0.5 mm to 20 mm. The length of the wick is equal to or slightly longer than the length of the candle.

The wick is preferably placed along or near the central, vertical axis of the candle body with the candle wax surrounding the wick. Typically, the wick is anchored in the middle of the bottom end of a container in which a wax is poured. The wick may also be inserted into either the hot liquefied wax, the cool liquefied wax or into the solidified wax, *e.g.*, by using a wicking machine such as a Kurschner wick machine. In a large candle (*e.g.*, having a diameter of 10 cm), two or more (or three or more) wicks can be inserted, each being placed apart from the others.

*Catalysts*

The catalyst useful in this invention facilitates combustion of the wax, reduces soot, and minimizes the formation of hazardous gas emission such as benzene and naphthalene. Typically, the catalyst comprises a catalytic metal (*e.g.*, platinum, palladium, rhodium, iridium, ruthenium, lanthanum, gold, manganese oxide, and any combination thereof). Preferably, the catalytic metal is deposited on a catalyst support (active carbon, zeolite, alumina, and any combination thereof) at an amount of 0.1% to 60% (preferably 0.5% to 30% and more preferably 5% to 10%) by weight of the catalyst.

Preferred catalysts include platinum on carbon (Pt/C), palladium on carbon (Pd/C), platinum-zeolite catalysts such as Pt/H-ZSM-5, palladium-zeolite catalysts such as Pd/H-ZSM-5, and platinum-alumina catalysts (Pt/alumina), palladium-alumina catalysts (Pd/Alumina), and aluminosilicate zeolite.

The wick of this invention typically has an amount of the catalyst at a level of 0.1% to 20% by weight of the wick (preferably, 0.2% to 10% and more preferably 0.5% to 8%).

*Carbon Materials*

The carbon material useful in this invention is a material having at least 90 wt% carbon atoms. The carbon material is present in the wick at any level, preferably 40 to 100 wt %, more preferably 50 to 100 wt %, by weight of the wick. Not to be bound by any theory, inclusion of the carbon material reduces soot and ash. Suitable carbon materials include carbon fiber, activated carbon, carbon nanotube, graphite, carbon black, graphene, graphene oxide, a carbon composite material, and any combination thereof.

The carbon material may have a form of any one or two or more selected from long fibers, short fibers, fabrics and particles. The wick may be formed of the carbon material alone, or in combination with the carbon material and a conventional wick material such as braided cotton. Alternatively, the wick has a carbon material dispersed in a matrix in which the matrix is formed of a binder, a pulp, a natural fiber, a synthetic fiber, or any mixture thereof.

*Fuels*

The candle of this invention contains one or two or more fuels selected from paraffin wax, paraffin oil, soy wax, bees wax, palm wax, gel wax, montan wax, carnauba wax, microcrystalline wax, fatty alcohols, fatty acids, fatty esters, natural and synthetic resins, and any thermoplastic blend of organic materials. Preferably, the fuel has a melting temperature of 40°C to 75°C (*e.g.*, 45°C to 60°C).

Processed wax compositions such as those disclosed in US2017/253832 can be used. These wax compositions usually contain a hydrogenated natural oil with a melting point between 40°C and 70°C (*e.g.*, 45°C to 60°C). The hydrogenated natural oil can be further filtered or bleached to remove nickel, a catalyst used in preparation of the hydrogenated natural oil. Preferably, the nickel content is reduced to a level of 0.5 ppm or less by weight of the oil.

Additional fuels are described in US8157873B2 such as lipid-based wax compositions including polyol fatty acid esters having a melting point of 48°C to 75°C.

*Candle formation*

The candle of this invention can be prepared by employing conventional candle making methods such as pouring, molding, dipping, casting, drawing, extrusion, rolling, and the like. General purpose candles are usually made by molding or pouring processes. The combustible body of the candle typically is a fuel or a mixture of fuels described above. Standard commercial candles usually contain 50% to 80% petroleum wax (including paraffin wax, microcrystalline wax, and petroleum jelly), 10% to 35% stearic acid (hydrogenated fatty acids), and 0 to 10% stabilizers, 0 to 3% coloring dyes, and 0 to 10% fragrance. Some candles contain small amounts of candelilla or carnauba waxes to regulate the softening or melting point of the finished wax. Beeswax candles are made of insect wax and paraffin plus a small amount of stiffening wax.

In addition, the candle body can further contain antioxidants, insect repellents, or other additives to improve the mechanical properties and burning characteristics.

A wick normally extends longitudinally through a candle body. More than a single wick may be utilized in a spaced relationship, but usually a single wick component is centrally disposed in a shaped candle body. When a candle wick is ignited, the wick is adapted to combust gradually, so that both the wick and candle body are consumed. The wick structure has porosity to absorb melted fuel into the wick by capillary action for combustion. The transport of melted fuel can be enhanced by one or more capillary grooves extending axially along the surface of the wick filament.

The candle can be in any form including taper, votive, pillar, container candles and the like, each of which places its own unique requirements on the wax used in the candle. For example, container candles, where the wax and wick are held in a container, typically glass, metal or the like, require lower melting points, specific burning characteristics such as wider melt pools, and should desirably adhere to the container walls. The melted wax should preferably retain a consistent appearance upon resolidification.

*Candle Kits*

The wick and candle wax may be packaged as part of a candle-making kit, e.g., in the form of beads or flakes of wax including fragrances and other applicable additives.

*Fragrances*

A fragrance is often included in the candle body to provide desirable scent or malodor coverage for air freshening purposes.

Suitable fragrances are described in International Application Publication WO2015/023961A1 and US Application Publication US2014/0287008A1.

The candle of this invention contains a fragrance ate a level of 0.1% to 30% (*e.g.*, 0.2% to 20%, 2% to 20%, and 2% to 15%) by weight of the candle.

*Soot index*

Soot production was measured using the Method based on European Standard: *Candles-Specifications for Sooting Behaviour EN 15426.* Soot is collected on a glass plate and a light source is shined through the glass. A photometer is used to measure the amount of illuminance in lux of both the glass plate with and without soot. The ratio of illuminance of sooted plate ($E_3$) and the clean plate ($E_1$) is used to calculate the soot index ($S_i$). The smaller the soot index, the less soot has been collected from the burning candle.

$$S_i = \left(1 - \frac{E_3}{E_1}\right) \times 100$$

VOC emissions in the form of benzene and naphthalene are usually measured via headspace collection on a sorbent tube with analysis by thermal desorption onto a GC/MS.

An Emissions Index ($E_i$) is calculated based on the ratio of the vapor concentration of a certain compound from a candle burned with normal, untreated wick ($C_u$) compared to the vapor concentration of the same compound using treated catalytic wick ($C_t$) from the same type of candle (same wax, container, fragrance formula and dose, base wick, etc.) as follows:

$$E_i = \frac{c_t}{c_u} \times 10.$$

The lower the Emissions Index is, the more effective the catalytic wick becomes.

The invention is described in greater detail by the following non-limiting examples. Without further elaboration, it is believed that one skilled in the art can, based on the description herein, utilize the present invention to its fullest extent. All publications cited herein are incorporated by reference in their entirety.

**EXAMPLE 1:**

A wick and candle of this invention, *i.e.*, Wick 1 and Candle 1, were prepared following the procedures below.

*Preparation of Wick 1*

Wick 1 was prepared by dry application of a catalyst to a wick support. A cotton wick support (0.174 g) was prepared by cutting a 6-inch wick section from a spool of raw cotton cored 44-24-18 wick commercially available from the Candledwic Company, Doylestown, Pennsylvania. The wick support is then placed in a stainless-steel tray and 0.009 g of platinum on activated carbon (Pt/C, 5% Pt loading) from Sigma-Aldrich (Allentown, Pennsylvania) was applied to the wick support by rolling the wick in the dry catalyst. The catalyst loaded wick support was then dipped into a melted paraffin wax (commercially available from the Candlewic Company) at 75°C until a desired diameter of 0.22 mm was achieved. The catalyst (Pt/C) load was 5% by weight of the uncoated wick and 1.3% by weight of the wax-coated wick.

*Preparation of Candle 1*

Candle 1 was prepared using Wick 1 described above. A paraffin and soy wax mixture (383.6 g, commercially available from Global Tech Industries, Cornelia, Georgia) was melted in a stainless-steel container at 70°C to 80°C, to which Research Fragrance 1 (33.36 g) was added. The fragranced mixture was then poured into a 10 cm diameter glass container containing 3 pieces of Wick 1 each on a metal tab glued in the center of the jar. After cooling, excessive wick was cut to obtain Candle 1.

**EXAMPLES 2-12:**

Wicks 2-12 and Candles 2-13 were prepared following the same procedure described above in Example 1 except that different fragrances or catalysts were used. See Table 1 below. Comparative wicks and candles (Controls 1-8) were prepared in the same way except that no catalyst was added to the wick or no fragrance was added to the candle body.

Table 1

| Example | Catalyst %[a] | Candle, %[b] |
| --- | --- | --- |
| 1 | 5% Pt/C | 8% Research Fragrance 1 |
| 2 | 5% Pd/C | 8% Research Fragrance 1 |
| 3 | 5% Pd/Alumina | 8% Research Fragrance 1 |
| 4 | 5% Pt/H-ZSM-5 | 8% Research Fragrance 1 |
| 5 | 5% Pd/H-ZSM-5 | 8% Research Fragrance 1 |
| 6 | 5% Aluminosilicate zeolite | 8% Research Fragrance 1 |
| 7 | 5% Pt/C | 8% Research Fragrance 2 |
| 8 | 5% Pt/C | 8% Research Fragrance 3 |
| 9 | 5% Pt/C | 8% Research Fragrance 4 |
| 10 | 5% Pt/C | 2% Research Fragrance 1 |
| 11 | 5% Pt/C | 8% Research Fragrance 1 |
| 12 | 5% Pt/C | 14% Research Fragrance 1 |
| Control 1 | no catalyst | No fragrance |
| Control 2 | no catalyst | 8% Research Fragrance 1 |

(continued)

| Example | Catalyst %[a] | Candle, %[b] |
|---|---|---|
| Control 3 | no catalyst | 8% Research Fragrance 2 |
| Control 4 | no catalyst | 8% Research Fragrance 3 |
| Control 5 | no catalyst | 8% Research Fragrance 4 |
| Control 6 | 5% Pt/C | 2% Research Fragrance 1 |
| Control 7 | 5% Pt/C | 8% Research Fragrance 1 |
| Control 8 | 5% Pt/C | 14% Research Fragrance 1 |
| [a]by weight of the wick [b]by weight of the candle | | |

*Soot Studies*

Candles 1-6 and the comparative candle Control 2 were evaluated for their soot index.

The soot was collected by a 4x4 inch glass plate placed on top of a mesh cylinder. A candle was burned in the mesh cylinder for 4 hours. The illuminance ($E_3$) of the sooted plate was measured using a digital lux meter, Dr.meter LX1330B (commercially available from Dr.meter, London) on top measuring the going through the glass plate. The illuminance ($E_1$) of a clean plate of the same material and size was also measured. The soot index ($S_i$) was calculated as described above. A low soot index indicates that a small amount of soot is collected from a burning candle. The procedure and calculation of the soot index can be found in the European Standard: Candles-Specifications for Sooting Behaviour EN 15426. The soot index of each candle was calculated using the method described above. The results were shown in Table 2 below.

Table 2

| Candle | Soot Index |
|---|---|
| 1 | 0.283 |
| 2 | 0.285 |
| 3 | 1.902 |
| 4 | 0.96 |
| 5 | 0.822 |
| 6 | 0.404 |
| Control 2 | 2.319 |

The soot index study demonstrated that the wick of this invention surprisingly decreased the soot level.

*Emission Studies*

Candles 1, 2, 5, 6 and the comparative candle Control 2 were evaluated for their emissions of benzene and naphthalene, two undesirable volatile organic compounds from the candle burning.

The benzene and naphthalene were collected via a Thermal Desorption Unit (TDU) tubes commercially available from Gerstel Inc., Linthicum, Maryland). Their concentrations were analyzed with a GC/MS instrument. The results are shown in Table 3 below.

Table 3

| Candle | Benzene, $\mu g/m^3$ | Naphthalene, $\mu g/m^3$ |
|---|---|---|
| 1 | 0.31 | 2.6 |
| 2 | 0.65 | 12 |

(continued)

| Candle | Benzene, $\mu$g/m$^3$ | Naphthalene, $\mu$g/m$^3$ |
|---|---|---|
| 5 | 0.57 | 3.63 |
| 6 | 1 | 4.9 |
| Control 2 | 2.2 | 17.98 |

Candles 10-11 were also evaluated together with Controls 6-8 for emissions of benzene, naphthalene, and emission index. The results are shown in Table 4 below.

Table 4

| Candle | Benzene, $\mu$g/m$^3$ | Naphthalene, $\mu$g/m$^3$ | Emission Index |
|---|---|---|---|
| 10 | 0.19 | 0.99 | 2.23 |
| Control 6 | 0.29 | 0.96 | 7.86 |
| 11 | 0.39 | 2.98 | 0.29 |
| Control 7 | 2.2 | 17.98 | 2.32 |
| 12 | 0.49 | 14.2 | 4.66 |
| Control 8 | 1.42 | 19.29 | 15.92 |

In each of Candles 10, 11, and 12 of this invention, the emissions were surprisingly decreased in terms of benzene, naphthalene, and Emission Index.

*Hedonic Evaluation*

Candles 7-9 and the corresponding comparative candles (Controls 3-5) were evaluated for their hedonic properties.
Each candle was burnt in a controlled, isolated air chamber for 30 minutes. The hedonic characters were evaluated by an expert panel of perfumers and evaluators. The evaluation results are shown in Table 5 below.

Table 5

| Candle | Fragrance | Hedonic Property |
|---|---|---|
| Candle 7 | Research Fragrance 2 | Cleaner, more spice, creamy |
| Control 3 | Research Fragrance 2 | Smoky, sooty |
| Candle 8 | Research Fragrance 3 | Cleaner, fresh, stronger fruit character |
| Control 4 | Research Fragrance 3 | Jammy, more room fill, smoky |
| Candle 9 | Research Fragrance 4 | Clean, watery, more freshness |
| Control 5 | Research Fragrance 4 | Smoky, fiery, woody |

Unexpectedly, each of Candles 7-9 had a cleaner, less smoky hedonic character as compared to their comparative counterparts.

**Claims**

1. A wick for a candle comprising a wick support and a catalyst deposited on the wick support.

2. The wick of claim 1, wherein the wick support is formed of cotton, linen, cellulose, plastics or ceramic material, paper, hemp, wood, metal, and combination thereof.

3. The wick of claim 1 or 2, wherein the catalyst is present at a level of 0.1% to 20% by weight of the wick.

4. The wick of any one of the preceding claims, wherein the catalyst is (i) a catalytic metal, or an oxide or salt thereof, or (ii) a catalytic metal deposited on a catalyst support.

5. The wick of claim 4, wherein the catalytic metal is platinum, palladium, rhodium, iridium, ruthenium, lanthanum, gold, copper, silver, calcium, magnesium, manganese, aluminum, cerium, any salt or oxide thereof, and any combination thereof; and the catalytic support is active carbon, zeolite, alumina, and any combination thereof.

6. The wick of any one of the preceding claims, wherein the catalyst is platinum on carbon (Pt/C), palladium on carbon (Pd/C), platinum on zeolite, palladium on zeolite, platinum on alumina (Pt/alumina), palladium on alumina (Pd/Alumina), and aluminosilicate zeolite.

7. The wick of any one of the preceding claims, wherein the wick support contains a carbon material at a level of 40% to 100% by weight of the wick support.

8. The wick of any one of the preceding claims, wherein the wick is coated with wax.

9. A candle comprising (i) the wick of any one of the preceding claims and (ii) a fuel.

10. The candle of claim 9, further comprising a fragrance.

11. The candle of claim 9 or 10, further comprising an additive selecting from the group consisting of antioxidants, insect repellents, colorants, and combinations thereof.

12. The candle of any one of claims 9 to 11, wherein the fuel is a soy wax, a paraffin wax, a palm wax, a beeswax, a hydrogenated natural oil, or a combination thereof.

13. The candle of any one of claims 9 to 12, wherein the candle has two or more wicks.

14. The candle of any one of claims 9 to 13, wherein the fragrance is present at a level of 0.1% to 30% by weight of the candle.

15. The candle of any one of claims 9 to 14, wherein the candle further comprises a container as a part of the candle; and/or wherein the candle is free-standing.

Europäisches
Patentamt

European
Patent Office

Office européen
des brevets

# EUROPEAN SEARCH REPORT

Application Number

EP 20 19 1175

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 386 904 A (MIYAHARA HISAO [JP] ET AL) 7 June 1983 (1983-06-07) * example 1 * * the whole document * | 1-15 | INV. C11C5/00 |
| X | CN 107 523 425 A (LI SHUCUN) 29 December 2017 (2017-12-29) * the whole document * | 1-15 | |
| X | anon: "V Series Wick", , 3 May 2019 (2019-05-03), XP002801439, Retrieved from the Internet: URL:https://candle-shack.co.uk/products/v-series-wick [retrieved on 2020-12-07] * the whole document * | 1-8 | |
| X | NL 1 009 518 C1 (ORGANISATIE BELEGGINGSMAATSCHA [NL]) 4 January 2000 (2000-01-04) * page 2, paragraph 2 - page 3, paragraph 1; claims 1, 10; figure 1a * | 1,2,9,15 | |
| X | JP S54 160068 A (PEGASUS CANDLE CO) 18 December 1979 (1979-12-18) * the whole document * | 1-15 | **TECHNICAL FIELDS SEARCHED (IPC)** C11C |
| X | JP H06 330082 A (PEGASUS KIYANDORU KK) 29 November 1994 (1994-11-29) * the whole document * | 1-15 | |

The present search report has been drawn up for all claims

| Place of search | Date of completion of the search | Examiner |
|---|---|---|
| The Hague | 10 December 2020 | Rooney, Kevin |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.................................................................................
& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 20 19 1175

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2020

| Patent document cited in search report | | Publication date | Patent family member(s) | | Publication date |
|---|---|---|---|---|---|
| US 4386904 | A | 07-06-1983 | NONE | | |
| CN 107523425 | A | 29-12-2017 | NONE | | |
| NL 1009518 | C1 | 04-01-2000 | NONE | | |
| JP S54160068 | A | 18-12-1979 | JP | S6256200 B2 | 24-11-1987 |
| | | | JP | S54160068 A | 18-12-1979 |
| JP H06330082 | A | 29-11-1994 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170253832 A
- US 8157873 B
- US 8551194 B
- US 8939758 B
- US 20030215763 A
- US 20180023034 A
- WO 1999031207 A
- WO 2008152353 A
- US 9974879 B
- US 7833294 B
- US 2017253832 A
- US 8157873 B2
- WO 2015023961 A1
- US 20140287008 A1

**Non-patent literature cited in the description**

- Candles-Specifications for Sooting Behaviour EN 15426. *European Standard*